# EUROPÄISCHE PATENTSCHRIFT

(11) **EP 1 062 282 B1**
(45) Veröffentlichungstag und Bekanntmachung des Hinweises auf die Patenterteilung: **10.05.2006**
(21) Anmeldenummer: 99911723.7
(22) Anmeldetag: 27.02.1999
(51) Int. Cl.: C09D 5/02, C09D 5/08, C08F 2/26

(54) **VERFAHREN ZUR HERSTELLUNG EINER WÄSSRIGEN POLYMERDISPERSION, ENTHALTEND EINEN EMULGATOR MIT PHOSPHATGRUPPEN**
METHOD OF MAKING AN AQUEOUS POLYMER DISPERSION CONTAINING AN EMULSIFIER WITH PHOSPHATE GROUPS
PROCEDE DE PREPARATION D'UNE DISPERSION POLYMERE AQUEUSE CONTENANT UN EMULSIFIANT AVEC DES GROUPES PHOSPHATE

(30) Priorität: 12.03.1998 DE 19810658
(43) Veröffentlichungstag der Anmeldung: 27.12.2000
(73) Patentinhaber: BASF Aktiengesellschaft, 67056 Ludwigshafen (DE)
(72) Erfinder: SCHLARB, Bernhard, D-67067 Ludwigshafen (DE); LEY, Gregor, D-67319 Wattenheim (DE); ZHAO, Cheng-Le, D-68723 Schwetzingen (DE); HAUNSCHILD, Alexander, D-67346 Speyer (DE); RAU, Maria, Gyopar, D-67454 Hassloch (DE); DERSCH, Rolf, D-67434 Neustadt (DE)
(86) Internationale Anmeldenummer: PCT/EP1999/001293
(87) Internationale Veröffentlichungsnummer: WO 1999/046337

(56) Entgegenhaltungen:
- EP-A- 0 395 988
- EP-A- 0 421 909
- WO-A-97/19748
- CH-A- 437 602

## Beschreibung

Die Erfindung betrifft ein Verfahren zur Herstellung einer wäßrigen Polymerdispersion, enthaltend 0,1 bis 10 Gewichtsteile, bezogen auf 100 Gewichtsteile Polymer, eines Emulgators A) mit einer Phosphatgruppe,
dadurch gekennzeichnet, daß der Emulgator zu mindestens 50 Gew.-% aus Ethylenoxid und Propylenoxidgruppen besteht und der Anteil der Ethylenoxidgruppen und Propylenoxidgruppen jeweils mindestens 10 Gew.-%, bezogen auf die Gesamtmenge der Ethylenoxid- und Propylenoxidgruppen beträgt, dadurch gekennzeichnet, dass der Emulgator A) während der Emulsionspolymerisation verwendet wird.

Wäßrige Polymerdispersionen, welche einen Emulgator mit Phosphatgruppen enthalten sind z.B. aus DE-A-2743764, EP-A-421909 und EP-A-221498 bekannt. DE-A-2743764 betrifft Polymerdispersionen, die in Anstrichfarben verwendet werden. Bei dem Emulgator handelt es sich um Alkanphosphorsäure oder deren Ester. In EP-A-421909 werden u.a. auch Emulgatoren mit Phosphatgruppen und Ethylenoxidgruppen beschrieben. Die Polymerdispersionen werden als Bindemittel für Beschichtungsmassen verwendet. Die Korrosionsschutzlacke gemäß EP-A-221498 enthalten ein Polymer mit einem copolymerisierten Emulgator. Der Emulgator besteht aus einer Phosphatgruppe, Propylenoxidgruppen und einer ethylenisch ungesättigten Gruppe.

Aus EP-A-115468 ist die Verwendung eines Gemischs aus einem Emulgator mit Phosphatgruppen und einem Emulgator mit Ethylenoxid- und Propylenoxidgruppen bekannt.

WO 97/19748 offenbart Dispergiermittel auf Basis eines Phosphatesters von Polyoxyalkylen-Blockcopolymeren, die als Verträglichkeitsvermittler zwischen Pigment und wässriger Phase wirken, sowie deren Verwendung in Anstrichfarben.

Durch Emulgatoren sollen emulgierte Monomertröpfchen und die nach Polymerisation erhaltenen Polymerteilchen in wäßriger Phase stabilisiert werden. Gewünscht ist naturgemäß eine ausreichende Stabilisierung mit möglichst geringer Emulgatormenge zu erreichen. Koagulatbildung soll vermieden werden.

Bei der späteren Anwendung verbleibt der Emulgator in der Beschichtungsmasse und bedingt daher auch Eigenschaften der erhaltenen Beschichtung. Oft sind Emulgatoren verantwortlich für-Blasenbildungen und Ungleichmäßigkeiten in der Beschichtungsoberfläche.

Im Falle einer Verwendung als Bindemittel für Anstrichfarben ist zusätzlich erwünscht, daß der Emulgator eine möglichst hohe Pigmentkonzentration in der wäßrigen Dispersion zuläßt und das Pigmentbindevermögen des Polymeren möglichst groß bleibt. Ein geringes Pigmentbindevermögen des Polymeren führt zu einer schlechteren mechanischen Stabilität der Beschichtung, z.B zu einer mangelhaften Nassabriebfestigkeit.

Im Falle von Korrosionsschutzlacken ist zusätzlich gewünscht, daß der Emulgator zum Korrosionsschutz beiträgt.

Aufgabe der vorliegenden Erfindung waren daher Emulgatoren, die die anstehenden Anforderungen an die Stabilität von Polymerdispersionen und die Oberflächenbeschaffenheit von daraus hergestellten Beschichtungen in möglichst hohen Maße erfüllen. Bei einer Verwendung in Anstrichfarben ist darüberhinaus ein hohes Pigmentbindevermögen und bei Korrosionsschutzlacken starker Korrosionsschutz gewünscht.

Demgemäß wurden die eingangs definierten wäßrigen Polymerdispersionen gefunden.

Bei dem in der wäßrigen Polymerdispersion enthaltenen Emulgator handelt es sich bevorzugt um eine Verbindung, die zu mindestens 70 Gew.-% aus Ethylenoxid- und Propylenoxidgruppen besteht.

Wesentliches Merkmal des Emulgators ist, daß er sowohl Ethylenoxidgruppen als auch Propylenoxidgruppen enthält.

Der Anteil der Ethylenoxidgruppen beträgt mindestens 10 Gew.-%, vorzugsweise mindestens 40 Gew.-%, bezogen auf das Molgewichts des Emulgators.

Der Anteil der Propylenoxidgruppen beträgt mindestens 10 Gew.-%, vorzugsweise mindestens 20 Gew.-%, bezogen auf das Molgewichts des Emulgators.

Das Molgewicht des Emulgators beträgt vorzugsweise 400 bis 2000 besonders bevorzugt 600 bis 1600 g/mol.

Vorzugsweise handelt es sich um einen Emulgator der Formel

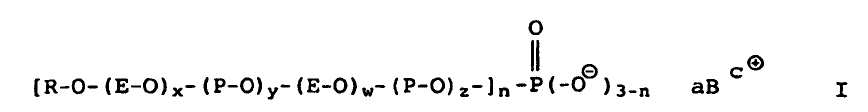

Worin die Variablen folgende Bedeutung haben:
E: CH₂-CH₂
P:

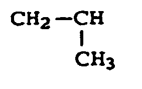

| | |
|---|---|
| R: | C₁-C₁₈-Alkyl |
| x,y,w,z: | jeweils ganze Zahl von 0 bis 30, |
| x+w: | mindestens 1 |
| y+z: | mindestens 1 |
| n: | 1 oder 2 |
| B: | einwertiges oder zweiwertiges Kation |
| a,c: | jeweils 1 oder 2 mit a x c=3-n |

Vorzugsweise steht R für C₁₀-C₁₆ Alkyl Vorzugsweise beträgt die Summe x+w 6 bis 20, besonders bevorzugt 10 bis 14. Vorzugsweise beträgt die Summe y+z 2 bis 10, besonders bevorzugt 3 bis 7. Vorzugsweise ist sowohl w als auch z gleich 0.

Vorzugsweise ist B ein einwertiges Kation, insbesondere von Na, K, NH₃ oder H, entsprechend ist c=1 und a=1 oder 2.

Verbindungen dieser Art sind z.B. unter dem Handelsnamen Lutensit® (BASF) erhältlich.

Die nach dem anmeldungsgemäßen Verfahren erhaltene wäßrige Polymerdispersion enthält den Emulgator vorzugsweise in Mengen von 0,1 bis 5 Gewichtsteilen, besonders bevorzugt von 0,2 bis 3 Gewichtsteilen pro 100 Gewichtsteile Polymer.

Das Polymer besteht vorzugsweise aus
a) 40 bis 100 Gew.-%, bevorzugt 60 bis 100 Gew.-%, besonders bevorzugt 80 bis 100 Gew.-% mindestens eines Hauptmonomeren und
b) 0 bis 40 Gew.-%, bevorzugt 0 bis 25 Gew.-%, besonders bevorzugt aus 0 bis 15 Gew.-% weiterer copolymerisierbarer Monomerer.

Hauptmonomere a) sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als Monomere (a) kommen bevorzugt die Alkyl(meth)acrylate, vorzugsweise (C₂- bis C₁₀-Alkyl)acrylate und -methacrylate und die Vinylaromaten, sowie Mischungen dieser Verbindungen in Betracht.

Ganz besonders bevorzugt sind Methylmethacrylat, n-Butylacrylat, n-Hexylacrylat, Octylacrylat, 2-Ethylhexylacrylat und Styrol sowie Mischungen dieser Monomere als Monomere (a).

Weitere Monomere b) sind z.B. Hydroxylgruppen enthaltende Monomere, insbesondere C₁-C₁₀-Hydroxyalkyl(meth)acrylate, (Meth)acrylamid, ethylenisch ungesättigte Säuren oder Säureanhydride, insbesondere Carbonsäuren, wie (Meth)acrylsäure oder Itaconsäure, Dicarbonsäuren, z.B. Maleinsäure oder Fumarsäure. Weitere Monomere b) sind z.B. auch vernetzend wirkende Monomere wie Butanddioldiacrylat oder Divinylbenzol.

Das Polymer kann auch mehrstufig aufgebaut sein. Die Stufen unterscheiden sich dabei in ihrer Monomerzusammensetzung. Die Monomeren einer Stufe werden vorzugsweise zu mindestens 80, besonders bevorzugt mindestens 90 Gew.-%, bezogen auf die Summe der Monomeren der jeweiligen Stufe, auspolymerisiert, bevor mit der Zugabe der Monomeren der nächsten Stufe begonnen wird.

Ein mehrstufiger Aufbau ist im Rahmen der vorliegenden Erfindung nicht notwendig. Es wurde jedoch beobachtet, daß ein mehrstufiger Aufbau eine niedrigere Mindestfilmbildetemperatur bei gleichzeitiger guter Blockfestigkeit (kaum Verklebung von beschichteten Substanzen miteinander beim Stapeln) bewirkt.

Besonders bevorzugt ist in diesem Zusammenhang ein zweistufiger Aufbau.

Die im folgenden I und II genannten Stufen enthalten vorzugsweise folgende Menge an Monomeren, bezogen auf das Polymer.

I: 5 bis 80 Gew.-%, besonders bevorzugt 10 bis 60 Gew.-% II: 20 bis 95 Gew.-%, besonders bevorzugt 90 bis 40 Gew.-%.

Die Monomerzusammensetzung der Stufen unterscheidet sich vorzugsweise in der Glasübergangstemperatur Tg, wobei die Tg der Monomeren einer Stufe nach FOX berechnet wird (FOX, Bull. Physics Soc. 1,3 (1956, S. 123).

Bevorzugt beträgt die Differenz zwischen der Tg der Stufe I und II mindestens 5°C, besonders bevorzugt mindestens 10°C; die Differenz ist jedoch im allgemeinen nicht größer als 40°C.

Bevorzugt hat die hydrophilere Stufe die tiefere Tg: die hydrophilere Stufe findet sich unabhängig davon, ob sie zuerst oder als zweites polymerisiert wurde, im fertigen Polymer außen, d.h. als Schale. Die hydrophobere Stufe bildet im allgemeinen den Kern.

Bevorzugt ist Stufe I die hydrophilere Stufe, d.h. sie wird aus Monomeren gebildet, die in ihrer Gesamtheit hydrophiler sind als die Monomeren der Stufe II.

Die Polymerdispersionen lassen sich in an sich bekannter Weise nach den allgemein bekannten Verfahren der Emulsionspolymerisation aus den Monomeren unter Verwendung der üblichen Emulgier- und Dispergierhilfsmittel und Polymerisationsinitatoren herstellen.

Als Dispergiermittel für die Durchführung von radikalisch wässerigen Emulsionspolymerisationen kommen üblicherweise eingesetzten Emulgatoren oder Schutzkolloide in Mengen von 0,1 bis 5 Gew.-%, insbesondere von 0,2 bis 3 Gew.-%, bezogen auf die Monomeren, in Betracht. Als Dispergiermittel wird vorzugsweise allein der eingangs beschriebene Emulgator A) oder Mischungen von Emulgatoren, welche zu mindestens 50 Gew.-% insbesondere zu mindestens 75 Gew.-% aus Emulgator A) bestehen, verwendet.

Weitere gebräuchliche Emulgatoren sind z.B. Alkalimetallsalze höherer Fettalkoholsulfate wie Na-n-Laurylsulfat, ethoxylierte C₈ bis C₁₀-Alkylphenole mit einem Ethoxylierungsgrad von 3 bis 30 sowie ethoxylierte C₈ bis C₂₅-Fettalkohole mit einem Ethoxylierungsgrad von 5 bis 50. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Geeignete Schutzkolloide sind hochmolekulare Naturstoffe wie Stärke, Methylcellulose, Pektine und Gelatine, synthetische Stoffe wie Polyvinylalkohol und Polyvinylpyrrolidon. Weitere Schutzkolloide sind ausführlich in Houben-Weyl, 1. c., Seiten 411 bis 420 beschrieben.

Als Polymerisationsinitiatoren kommen alle diejenigen im Betracht, die in der Lage sind, eine radikalische Emulsionspolymerisation in wässerigen Medien auszulösen. Sie werden im allgemeinen in Mengen von 0,1 bis 10 Gew.-%, vorzugsweise von 0,2 bis 4 Gew.-%, bezogen auf die Monomeren, eingesetzt. Übliche Verbindungen sind anorganische Peroxide, z.B. Natrium- und Ammoniumperoxidisulfat und Wasserstoffperoxid, organische Peroxide wie Dibenzoylperoxid oder tert.-Butylhydroperoxid sowie Azoverbindungen wie Azoisobuttersäuredinitril. Diese Initiatoren sind für die bei den radikalischen Emulsionspolymerisationen üblichen Reaktionstemperaturen von 50 bis 100°C geeignet. Werden niedrigere Reaktionstemperaturen von etwa 40 bis 60°C gewünscht, sind Redoxsysteme wie Kombinationen aus Perverbindungen und einem reduzierenden Co-Initiator dem Natriumsalz der Hydroxymethansulfinsäure, Ascorbinsäure oder Eisen-II-salzen vorzuziehen.

Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, 1. c., Seiten 133ff).

Besonders bewährt hat sich ein Zulauf-Verfahren, bei dem man von einer Vorlage, bestehend aus einem Teil der Monomeren, im allgemeinen bis zu 20 Gew.-%, Wasser, Emulgator und Initiator ausgeht. Der Rest der Monomeren und gegebenenfalls Regler in emulgierter Form sowie zusätzlich eine wässerige Lösung weiteren Polymerisationsinitiators werden nach Maßgabe der Polymerisation zugesetzt.

Der Emulgator A) wird während der Emulsionspolymerisation als Emulgator verwendet. Die Mitverwendung anderer Dispergiermittel ist nicht notwendig.

Die erfindungsgemäße wäßrige Polymerdispersion hat vorzugsweise einen Feststoffgehalt von 35 bis 65, besonders bevorzugt von 45 bis 55 Gew.-%.

Die Glasübergangstemperatur Tg der Copolymerisate liegt vorzugsweise im Bereich von -60 bis 140°C, besonders bevorzugt im Bereich von 0 bis 70°C (berechnet nach Fox, Bull. Physics Soc. 1, 3 (1956), S.123).

Die erfindungsgemäße Polymerdispersion zeichnet sich durch eine hohe Stabilität aus, es kommt kaum zu Koagulatbildungen.

Die erfindungsgemäße Polymerdispersion kann als Bindemittel für Beschichtungsmittel, z.B. für Lacke, Schutzüberzüge, Papierstreichmassen, dekorative Überzüge, Anstrichfarben, Klebstoffe, Beschichtungen auf Textilien und auch als Bindemittel für ungebundene Faservliese verwendet werden.

Für die unterschiedliche Verwendung können geeignete Hilfsmittel zugesetzt werden, z.B Verlaufsmittel, Verdicker, Entschäumer, Füllstoffe, Pigmente, Dispergierhilfsmittel für Pigmente etc. Die Beschichtungen können durch Auftragen der Beschichtungsmittel auf geeignete Substrate, wie Metall, Kunststoff, Holz, Papier, Textilien und Trocknung, gegebenenfalls bei erhöhter Temperatur, erhalten werden.

Die erhaltene Beschichtungen zeichnen sich durch eine gleichmäßige Oberfläche, insbesondere auch durch Blasenfreiheit aus.

Insbesondere eignet sich die erfindungsgemäße Polymerdispersion als Bindemittel für Korrosionsschutzlacke und als Bindemittel für Anstrichfarben.

Im Falle der Korrosionsschutzlacke werden erfindungsgemäße Polymerdispersionen mit einer Tg von vorzugsweise von 20 bis 60°C verwendet.

Neben der Polymerdispersion können die Korrosionsschutzlacke noch Korrosionsschutzmittel, wie Korrosionsinhibatoren oder aktive Korrisionsschutzpigmente, z.b. Zinkphosphat enthalten.

Auch ohne weitere Korrosionsschutzmittel hat die erfindungsgemäße Polymerdispersion bereits eine gute Korrosionsschutzwirkung.

Im Falle der Anstrichfarben werden erfindungsgemäße Polymerdispersionen mit einer Tg von vorzugsweise von -55 bis 90°C, besonders bevorzugt von -10 bis 80°C und ganz besonders genannt, bevorzugt von 0 bis 60°C verwendet.

Anstrichfarben, auch Dispersionsfarben genannt, sind eine der größten Produktgruppen der Lack- und Farbenindustrie (siehe U11-manns Enzyklopädie der technischen Chemie, 4. Aufl., Band 15, Verlag Chemie, Weinheim 1978, S. 665). Dispersionsfarben enthalten in der Regel als Bindemittel ein filmbildendes Polymer und als farbgebenden Bestandteil wenigstens ein anorganisches Pigment, ferner anorganische Füllstoffe und Hilfsmittel, wie Entschäumer, Verdicker, Netzmittel und gegebenenfalls Filmbildehilfsmittel.

Die Qualität von Dispersionsfarben hängt maßgeblich von der Fähigkeit des filmbildenden Polymers ab, die nichtfilmbildenden Bestandteile, die Pigmente und anorganische Füllstoffe gleichmäßig zu binden. Das Pigmentbindevermögen des Bindemittels spielt insbesondere eine Rolle bei Dispersionsfarben mit einem hohen Gehalt an anorganischen Pigmenten und Füllstoffen, charakterisiert durch eine Pigmentvolumenkonzentration PVK > 40 %. Die Pigmentvolumenkonzentration wird üblicherweise definiert als der Quotient aus dem Gesamtvolumen der festen anorganischen Bestandteile (Pigment + Füllstoffe) geteilt durch das Gesamtvolumen der festen anorganischen Bestandteile (Pigmente und Füllstoffe) und der Polymerisatteilchen der wässrigen Bindemittelpolymerisatdispersion; siehe Ullmanns Enzyklopädie der technischen Chemie, 4. Auflage, Band 15, S. 668). Ein geringes Pigmentbindevermögen führt zu einer schlechten mechanischen Stabilität der Beschichtung, die sich beispielsweise in einer geringen Nassabriebfestigkeit äußert. Eine hohe Nassabriebfestigkeit ist jedoch insbesondere bei abwaschbaren Dispersionsfarben erwünscht. Weiterhin muss gewährleistet sein, dass das Bindemittel eine hinreichend niedrige Filmbildetemperatur aufweist, um so eine Verarbeitung der Beschichtungsmasse auch bei niedrigen Temperaturen zu gewährleisten. Gleichzeitig darf das Bindemittelpolymer nicht zu weich sein, damit eine ausreichende Festigkeit gewährleistet ist, oder zu klebrig sein, um ein Anschmutzen zu vermeiden.

Eine weitere wichtige Eigenschaft von Dispersionsfarben ist die Blockfestigkeit der Anstriche, darunter versteht man eine geringe Verklebung des Anstrichfilms mit sich selbst unter Druckbelastung und erhöhter Temperatur (gute Blockfestigkeit).

Die erfindungsgemäßen Anstrichfarben (Dispersionsfarben) enthalten Pigmente und Füllstoffe vorzugsweise in solchen Mengen, daß die PVK 15 % bis 85 % und besonders bevorzugt 25 % bis 55 % beträgt.

Typische Pigmente sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) verwendet. Die Dispersionsfarben können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum.

Zur Erhöhung der Deckkraft und zur Einsparung von Weißpigmenten werden häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Die erfindungsgemäßen Dispersionsfarben sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, gestrichene, grundierte oder verwitterte Untergründe.

Die unter Verwendung der erfindungsgemäßen Dispersionsfarben hergestellten Anstriche zeichnen sich durch eine hohe Nassabriebfestigkeit und eine gute Haftung in nassem Zustand aus. Darüber hinaus sind die Anstriche nicht klebrig und zeichnen sich solche Beschichtungen durch eine hohe Blockfestigkeit aus.

### Beispiele:

### I Herstellung von Polymerdispersionen für Korrosionsschutzüberzüge

Der Emulgator wurde in Wasser gelöst und mit Ammoniak auf pH = 9 gestellt. Die Vorlage wurde in einem Polymerisationsgefäß, das mit einem Ankerrührer, Rückflußkühler und 2 Zulaufgefäßen ausgestattet war, in einer Stickstoffatmosphäre auf eine Temperatur von 85°C geheizt und 15 min. anpolymerisiert. Dann wurde der Zulauf 1 in 2 Stunden und der Zulauf 2 in 2 1/4 Stunden zudosiert. Anschließend wurde noch 1 Stunde lang nachpolymerisiert. Im Falle der Beispiele V2 und 2 wurde anschließend der Zulauf 3 innerhalb von 10 min. zudosiert. Dann wurde über ein Sieb der Maschenweite 500 µm filtriert, und der Koagulatanteil im feuchten Zustand ausgewogen.

Emulgator A: C_{13/15}-[EO]₁₂-{PO}₅-PO₃H₂., Mischung aus Phosphorsäure Mono- und Diester.

Emulgator B: Alkylaryl-polyglykolether-phosphat, Mischung aus Phosphorsäure Mono- und Diester, (enthält nur EO-Einheiten, zum Vergleich).

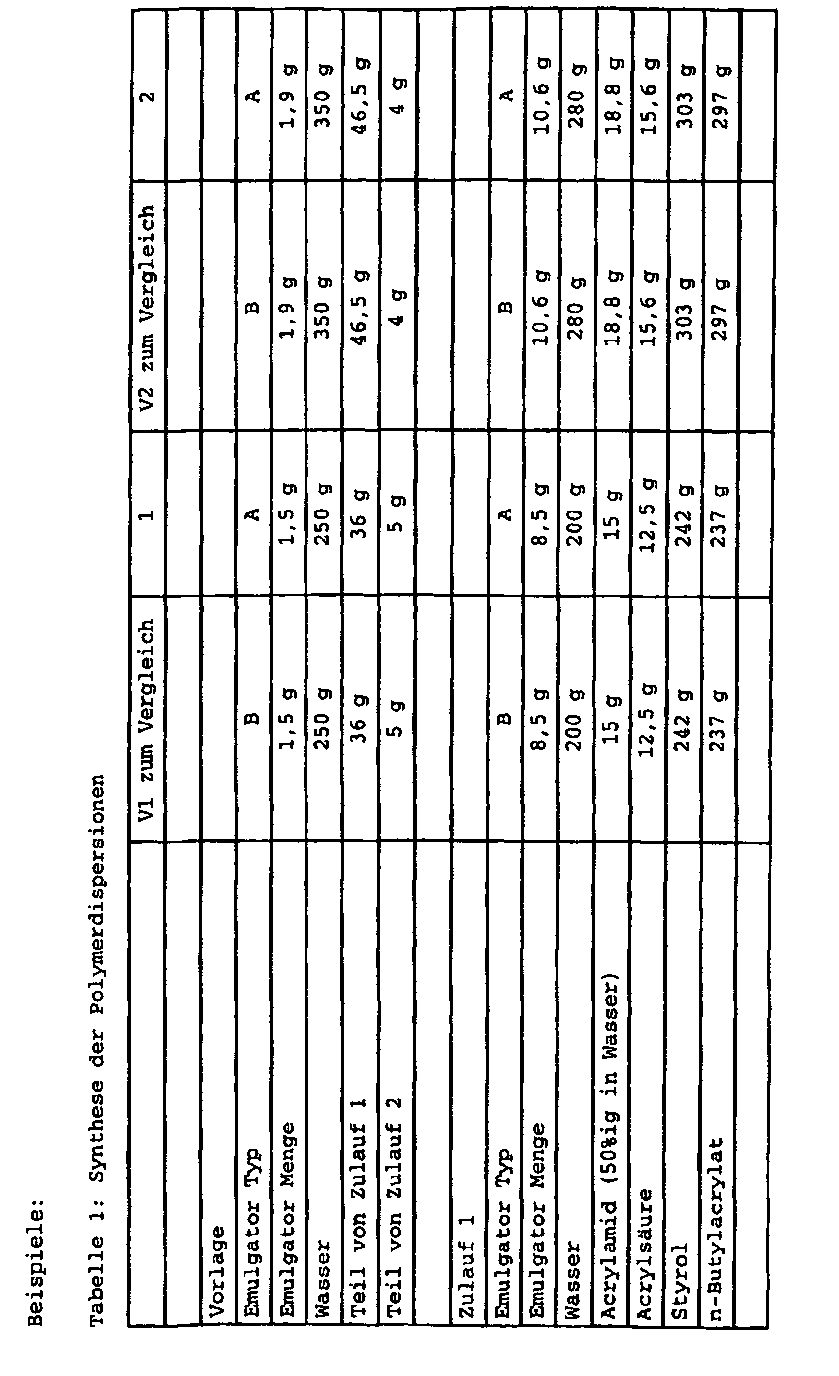

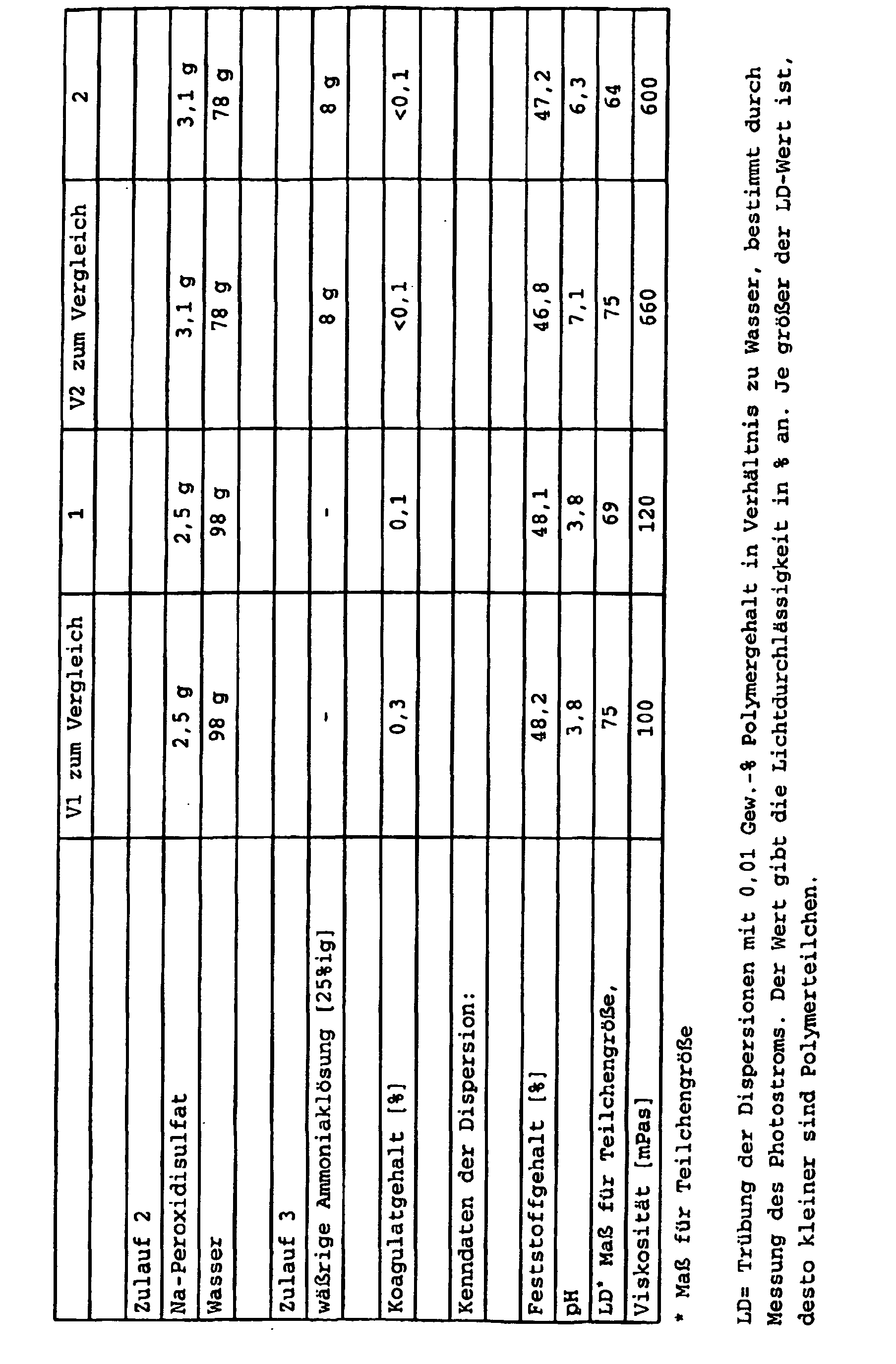

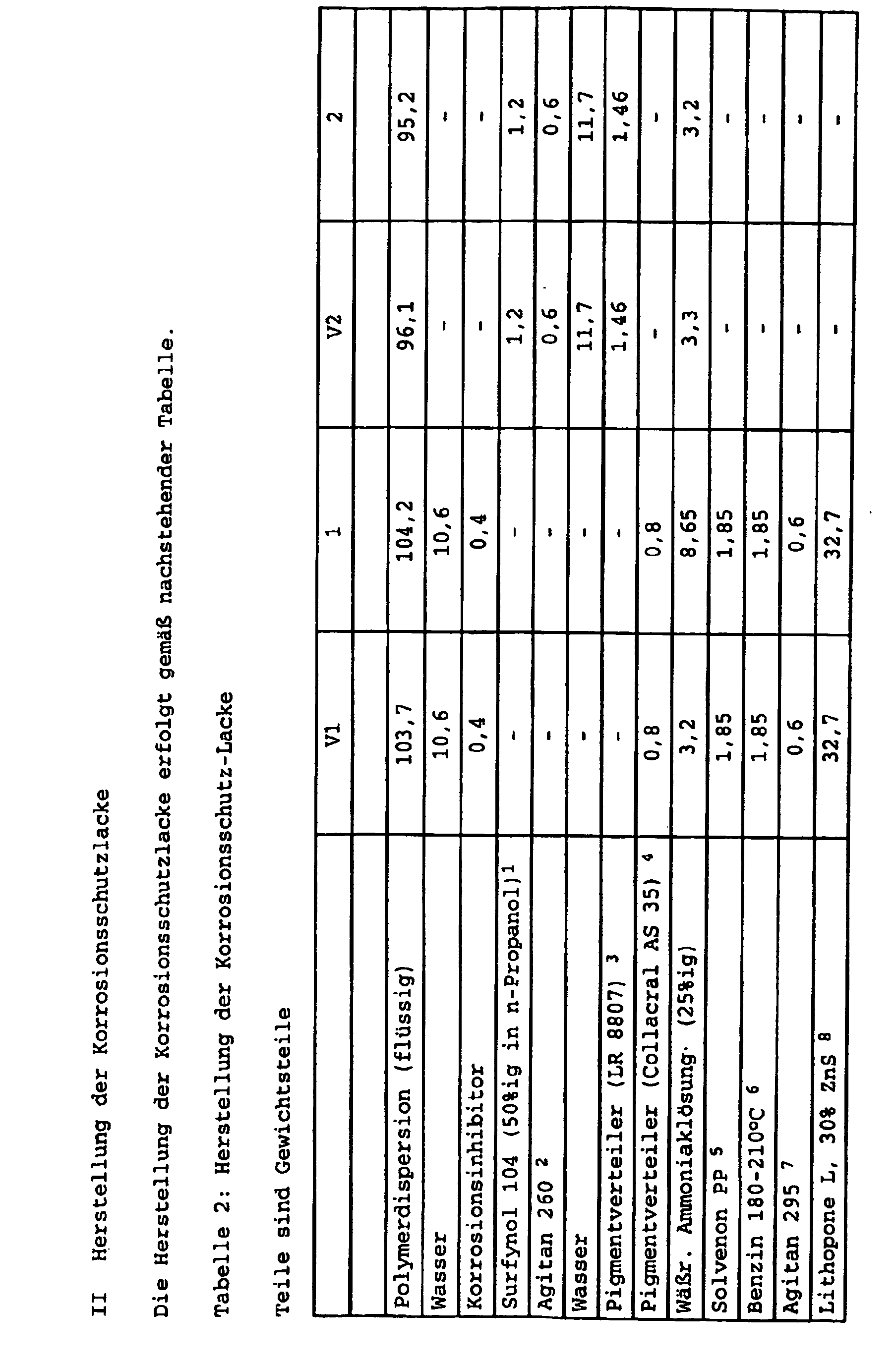

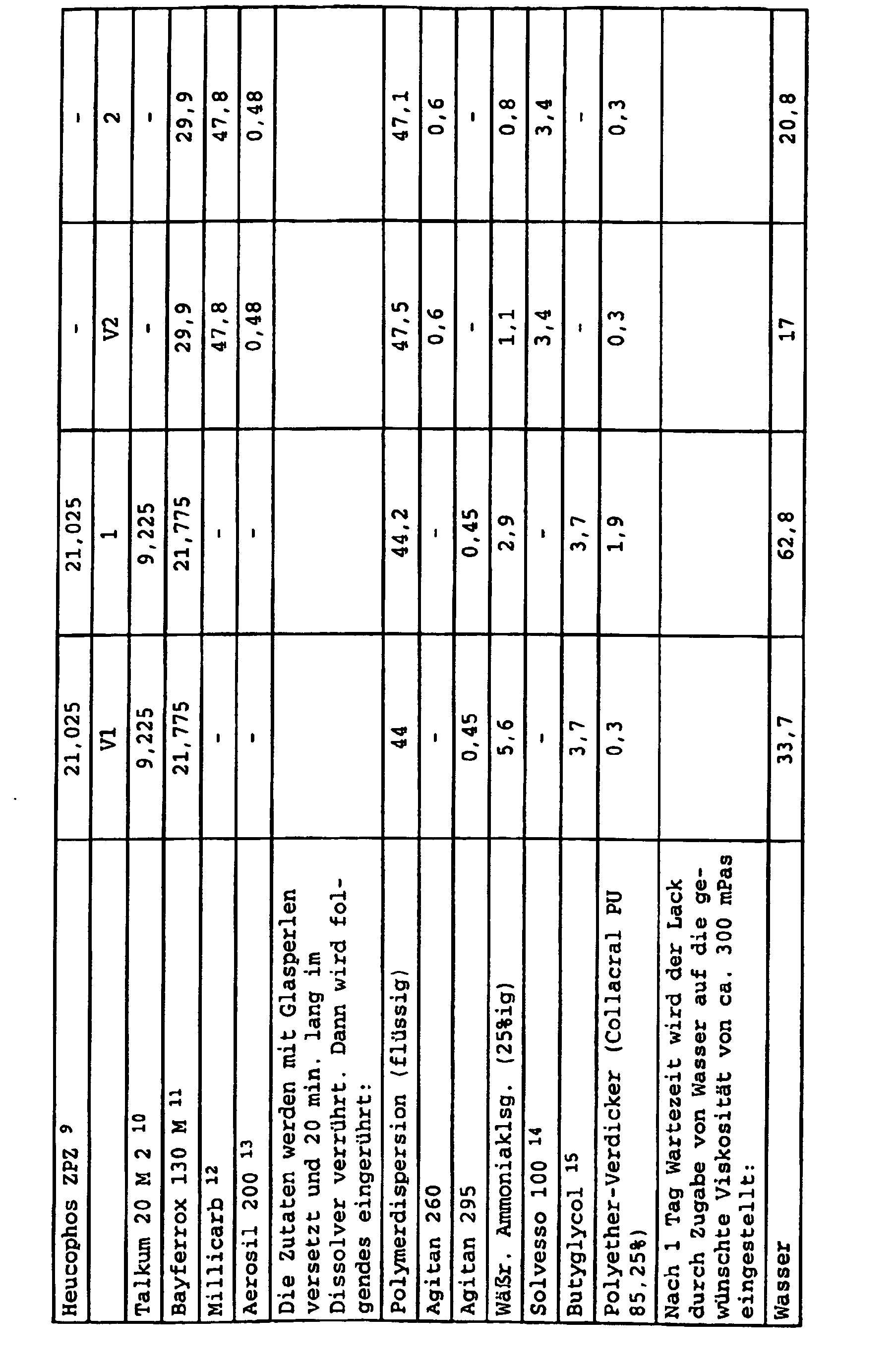

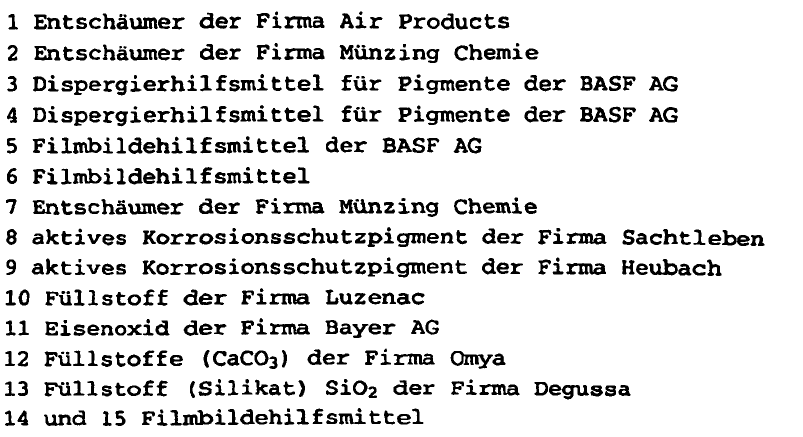

### III Prüfung der Korrosionsschutzüberzüge

Die so hergestellten Lacke wurden mit Hilfe einer Handspritzpistole durch Spritzen auf Stahlbleche aufgetragen, wobei die Trockenschichtdicke des Lacks 80 µm betrug. Die beschichteten Bleche wurden 7 Tage lang bei Raumtemperatur und anschließend 1 Tag bei einer Temperatur von 50°C getrocknet. Als Substrat diente Eisenblech (St 1405) (gereinigt mit Essigester). Der getrocknete Lack wurde mit Hilfe einer Stereolupe der Firma Zeiss auf ihre Qualität beurteilt. Der Salzsprühtest erfolgte nach der DIN 53 167. Die Ergebnisse sind in der folgenden Tabelle zusammengestellt:

**Tabelle 3: Prüfergebnisse: Schichtdicke: 80 µm (trocken).**

| | V1 | 1 | V2 | 2 |
|---|---|---|---|---|
| Emulgator Typ | B | A | B | A |
| Beurteilung der Lackoberflächen mit der Stereolupe | übersät mit Microstippen, daher keine weitere Prüfung | in Ordnung | in Ordnung | in Ordnung |
| | | | | |
| Beurteilung der lakkierten Bleche nach 48 h Salzsprühtest: | | | | |
| Blasen [%] | | | 25 | 15 |
| | | | | |
| Unterrostung [Note] | | | 3 | 0 |

### Beurteilung:

Unterrostung:
Note 0-5
0 = keine Unterrostung
5 = starke Unterrostung
Blasen: angegeben sind % der Oberfläche, welche Blasen aufweist.

Die Korrosionsschutzlacke auf Basis der erfindungsgemäßen Bindemittel zeigen eine bessere Stabilität (keine Stippenbildung bei der Formulierung oder Applikation ) und im Salzsprühtest eine verringerte Blasenbildung und eine geringere Unterrostung.

### IV Herstellung von Polymerdispersionen für Anstrichfarben

### Abkürzungen

BA = n-Butylacrylat
MMA = Methylmethacrylate
MAA = Methacrylsäure
UMA = Ureidomethacrylat
NaPS = Natriumpersulfat
tBHP = tert-Butylhydroperoxid
ABS = Acetonbisulfat
E1 = Dowfax 2A1, Dodecylphenoxybenzenedisulfonsäure Natriumsalz (Warenzeichen of Dow Chemicals)
E2 = Disponil FES 77, Alkyl(C₁₀₋₁₆)ethoxy(EO)sulfonate, Natriumsalz (Warenzeichen of Henkel KGaA)
Emulgator B (siehe oben, erfindungsgemäß).

Die Vorlage gemäß Tabelle 4 wurde in einem Polymerisationsgefäß in einer Stickstoffatmosphäre auf 85°C aufgeheizt und dann wurde eine Teilmenge von Zulauf 2 zugegeben. Zulauf 1 wurde danach kontinuierlich über 3 Stunden und die verbleibende Initiatorlösung über 4 Stunden zudosiert anschließend wurde noch einer Stunde nachpolymerisiert. Danach wurde auf 60°C gekühlt und zur Absenkung des Restmonomergehaltes 6,35 g tBHP (15 % in Wasser) und 7,25 g ABS (13,1 % in Wasser) zugegeben und nach eine Stunde bei 60°C gehalten. Danach wurde abgekühlt und ein pH von 7,4 eingestellt.

**Tabelle 4: Herstellung der Polymerdispersionen**

| | V3 (Vergleich) | 3 |
|---|---|---|
| Vorlage | | |
| Wasser | 234 g | 234 g |
| Polystyrolsaat (33%ig) | 4,61 g | 4,61 g |
| Na-Pyrophosphat(5%ig) | 38 g | 38 g |
| Teil von Zul. 2 | 7,24 g | 7.24 g |
| | | |
| Zulauf 1 | | |
| E 1 (45%ig in Wasser) | 21,11 | 21,11 |
| E 2 (30%ig in Wasser) | 47,5 | - |
| Emulgator A | - | 14,21 |
| Wasser | 227,7 g | 238,5 g |
| Methacrylsäure | 19 g | 19 g |
| MMA | 356,25 g | 356,25 g |
| BA | 502,55 g | 502,25 g |
| UMA (25%ig in MMA) | 72,2 g | 72,2 g |
| | | |
| Zulauf 2 | | |
| Na-Peroxodisulfat | 2,38 g | 2,38 g |
| Wasser | 70 g | 95 g |
| | | |
| | | |
| Koagulatgehalt [%] | 0 | 0 |
| NaOH (10%ig) | 13,1 g | 38,7 |
| | | |
| Feststoffgehalt [%] | 60,1 | 51,2 |
| pH | 7,4 | 8,8 |
| Teilchengröße (nm) | 270 | 377 |
| MFT (°C) | 5 | <2 |

Die Mindestfilmbildetemperatur (MFT) der Polymerisatdispersionen erfolgte in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerdispersion aufgebracht. In den Bereichen der Filmbildebank, deren Temperatur oberhalb der MFT liegt, bildet sich beim Trocknen ein klarer Film aus, wohingegen sich in den kühleren Bereichen ein weißes Pulver bildet. Anhand des bekannten Temperaturprofils der Platte wird die MFT visuell bestimmt.

### V. Herstellung der Dispersionsfarben

1. Dispersionsfarben mit einer Pigmentvolumenkonzentration (PVK) von 46,9 %;
In einem Gefäß wurden folgende Bestandteile vorgelegt:

| | |
|---|---|
| 105,60 g | Wasser |
| 2,00 g | Verdicker¹⁾ |
| 0,80 g | 2-Amino-2-methylpropanol mit 5 % Wasser |
| 1,00 g | Dispergiermittel²⁾ |
| 3,40 g | 10 gew.-%-ige, wässrige Tetrakaliumpyrophosphat-Lösung |
| 1,70 g | handelsübliches Biozid³⁾ |
| 3,40 g | handelsüblicher Entschäumer⁴⁾ |
| 10,10 g | Propylenglykol |
| 10,10 g | Dipropylenglykol-n-butylether |
| 190,10 g | Titandioxidpigment⁵⁾ |
| 181,60 g | Feldspat⁶⁾ |
| 50,70 g | kalzinierter Kaolin⁷⁾ |

Die Bestandteile wurden für 20 Minuten in einem Hochgeschwindigkeitsdispergator vermischt. Anschließend gab man folgende Bestandteile unter Rühren zu:

| | |
|---|---|
| 266,01 g | Polymerdispersion 3 bzw. V3 (60,1 gew.-%ig) |
| 2,50 g | handelsüblicher Entschäumer⁴⁾ |
| 11,80 g | handelsüblicher Verdicker⁸⁾ |
| 159,00 g | Wasser |

Die anwendungstechnischen Eigenschaften der Dispersionsfarben sind in Tabelle 1 zusammengefasst.
1) Hydroxyethylcellulose mit einer Viskosität von 30 Pas (bestimmt als 2%ige Lösung in Wasser bei 25 °C); Natrosol® 250 HR der Hercules GmbH Düsseldorf.
2) 30 gew.-%ige wässrige Lösung eines Ammoniumpolyacrylats; Pigmentverteiler A der BASF AG, Ludwigshafen.
3) Proxel® GXL der Zeneca GmbH, Frankfurt.
4) Foammaster® S der Henkel KGaA, Düsseldorf
5) Kronos® 2101 der Kronos, Houston/Texas
6) Minex® 4 der Unimin Speciality Minerals Inc. Elco/Illinois, mittlere Korngröße 7,5 µm
7) Icecap® der Burgess Pigment Co., Sandersville, Georgia
8) 20 gew.-%ige Lösung eines assoziativ verdickenden Polyurethans, Acrysol RM 202 der Rohm and Haas Deutschland GmbH, Frankfurt

### VI. Bestimmung der anwendungstechnischen Eigenschaften

1. Abriebfestigkeit
Die Bestimmung der Abriebfestigkeit erfolgte nach ASTM D 2486 mittels einer "Gardner"-Scheuermaschine und einem standardisierten Scheuermedium (abrasiver Typ SC-2).
Die Dispersionsfarben wurden mit einem Kastenrakel (Spalthöhe 175 µm, 7 MIL) auf Leneta-Folien aufgebracht. Anschließend wurden die Folien unter Normklima (23 °C, 50 % rel. Luftfeuchtigkeit) in einer Klimakammer 14 Tage getrocknet. Die Trockenschichtdicke lag bei etwa 50 µm.
Für jede Dispersionsfarbe wurde an 3 Folien der Abriebtest durchgeführt. Hierzu wurden in der Mitte der Folie ein 250 µm dicker Blechstreifen unterlegt. Anschließend wurde Scheuerpaste aufgebracht und mit einer Nylonbürste solange gescheuert, bis die Beschichtung an der Stelle, wo das Blech unterlegt war, durchgescheuert war. Angegeben wird die Anzahl von Doppelhüben, die erforderlich ist, um die Beschichtung an einer Stelle vollständig durchzuscheuern. Angegeben ist der Durchschnitt zweier Werte, die weniger als 25 % voneinander abweichen.
2. Blockfestigkeit
Die Blockfestigkeit wurde gemäß ASTM D 4946 bestimmt. Hierzu brachte man die Dispersionsfarben mit einem Kastenrakel (3 MIL, Spalthöhe 75 µm) auf Leneta-Folien auf. Anschließend trocknete man die Folien 24 Stunden unter Norm-Klimabedingungen. Die getrockneten, beschichteten Folien wurden anschließend in 3,8 x 3,8 cm große Quadrate zerschnitten. Die Quadrate wurden mit den beschichteten Seiten aufeinandergelegt und zwischen zwei Glasplatten plaziert. Auf diese Glasplatten gab man ein Gewicht von 2 kg. Diese Anordnung wurde 24 Stunden bei 50 °C aufbewahrt. Anschließend untersuchte man, wie sich die Folien voneinander entfernen lassen. Hierzu legte man eine Bewertungsskala von 0 bis 10 zugrunde:
0 = 75 bis 100 % Abriss der Beschichtung
1 = 50 bis 75 % Abriss
2 = 25 bis 50 % Abriss
3 = 5 bis 25 % Abriss
4 = sehr klebrig: 0 bis 5 % Abriss,;
5 = mäßige Klebrigkeit
6 = leichte Klebrigkeit
7 = leichte bis sehr leichte Klebrigkeit
8 = sehr leichte Klebrigkeit
9 = kaum klebrig
10 = nicht klebrig

3. Nasshaftung
Die Nasshaftung wurde wie folgt bestimmt: In einem ersten Schritt wurden die Leneta-Folien mit lösungsmittelhaltigem Alkydharzlack (Glasurit EA, Hochglanzlack der BASF deco GmbH, Köln) mit einem Kastenrakel (Spalthöhe 180 µm) beschichtet. Die Folien wurden 24 Stunden in einer Normklimakammer und anschließend 14 Tage in einem Ofen bei 50 °C getrocknet. Anschließend wurden die Dispersionsfarben mit einem Applikator (Spalthöhe 250 µm, 10 MIL) auf die mit Alkydharz beschichteten Leneta-Folien als zweite Beschichtung aufgebracht. Die so erhaltenen Folien wurden 3 Tage unter Norm-Klimabedingungen getrocknet. Aus jeder Folie wurden 3 Prüfkörper herausgeschnitten. Jeder Prüfkörper wurde horizontal mit einer Rasierklinge angeschnitten. Anschließend führte man einen Frost-Tau-Test durch. Hierzu wässerte man die Prüfkörper und bewahrte sie anschließend in einem Tiefkühlschrank 16 Stunden bei -20 °C auf. Dieser Vorgang wurde noch zweimal wiederholt. Anschließend ließ man die Proben auf Raumtemperatur erwärmen und wässerte sie dann erneut 10 Minuten. Danach wurde die Haftung der Beschichtung am Anschnitt durch Kratzen mit dem Fingernagel bestimmt. Hierbei legte man eine Bewertungsskala von 0 bis 5 zugrunde, wobei 0 für eine optimale Adhäsion und 5 für keine Adhäsion (fehlerfreies Abziehen) steht. Die Werte 1 bis 4 stehen für Zwischenwerte.

**Tabelle 5: Ergebnisse**

| Dispersion | Blockfestigkeit | Nasshaftung | Nassabriebfestigkeit |
|---|---|---|---|
| 3 | 10 | 2-3 | 1800 |
| V3 | 10 | 2-3 | 1200 |

## Patentansprüche

1. Verfahren zur Herstellung einer wäßrigen Polymerdispersion durch Emulsionspolymerisation, enthaltend
0,1 bis 10 Gewichtsteile, bezogen auf 100 Gewichtsteile Polymer, eines Emulgators A) mit einer Phosphatgruppe,
**dadurch gekennzeichnet, daß** der Emulgator zu mindestens 50 Gew.-% aus Ethylenoxid und Propylenoxidgruppen besteht und der Anteil der Ethylenoxidgruppen und Propylenoxidgruppen jeweils mindestens 10 Gew.-%, bezogen auf die Gesamtmenge der Ethylenoxid- und Propylenoxidgruppen beträgt, **dadurch gekennzeichnet, dass** der Emulgator A) während der Emulsionspolymerisation verwendet wird.

2. Verfahren gemäß Anspruch 1, **dadurch gekennzeichnet, daß** das Molekulargewicht des Emulgators 400 bis 2000 g/mol beträgt.

3. Verfahren gemäß Anspruch 1 oder 2, **dadurch gekennzeichnet, daß** der Emulgator zu mindestens 10 Gew.-% aus Ethylenoxidgruppen und zu mindestens 10 Gew.-% aus Propylenoxidgruppen besteht.

4. Verfahren gemäß einem der Ansprüche 1 bis 3,
**dadurch gekennzeichnet, daß** das Polymer zu 40 bis 100 Gew.-% aus sogenannten Hauptmonomeren, ausgewählt aus
C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen und aliphatischen Kohlenwasserstoffen mit 2 bis 8 C-Atomen und 1 oder 2 Doppelbindungen besteht.

## Claims

1. A process for preparing an aqueous polymer dispersion by emulsion polymerization, comprising from 0.1 to 10 parts by weight per 100 parts by weight of polymer of an emulsifier A) having a phosphate group, wherein said emulsifier consists of at least 50% by weight of ethylene oxide and propylene oxide groups and the proportion of the ethylene oxide groups and propylene oxide groups is in each case at least 10% by weight, based on the overall amount of the ethylene oxide and propylene oxide groups, wherein the emulsifier A) is used during the emulsion polymerization.

2. The process according to claim 1, wherein the molecular weight of the emulsifier is from 400 to 2000 g/mol.

3. The process according to claim 1 or 2, wherein the emulsifier consists at least 10% by weight of ethylene oxide groups and at least 10% by weight of propylene oxide groups.

4. The process according to any of claims 1 to 3, wherein the polymer consists 40 to 100% by weight of principal monomers selected from C₁-C₂₀-alkyl(meth)acrylates, vinyl esters of carboxylic acids comprising up to 20 carbons, vinylaromatic compounds of up to 20 carbons, ethylenically unsaturated nitriles, vinyl halides, vinyl ethers of alcohols comprising 1 to 10 carbons, and aliphatic hydrocarbons of 2 to 8 carbons and 1 or 2 double bonds.

## Revendications

1. Procédé de préparation d'une dispersion aqueuse de polymère par polymérisation en émulsion, contenant 0,1 à 10 parties en poids, pour 100 parties en poids de polymère, d'un agent émulsionnant A) comportant un groupe phosphate, **caractérisé en ce que** l'agent émulsionnant est constitué pour au moins 50 % en poids de groupes oxyde d'éthylène et oxyde de propylène et la fraction de groupes oxyde d'éthylène et de groupes oxyde de propylène est respectivement d'au moins 10 % en poids, par rapport à la quantité totale des groupes oxyde d'éthylène et oxyde de propylène, **caractérisé en ce que** l'agent émulsionnant A) est utilisé pendant la polymérisation en émulsion.

2. Procédé suivant la revendication 1, **caractérisé en ce que** le poids moléculaire de l'agent émulsionnant est de 400 à 2000 g/mole.

3. Procédé suivant la revendication 1 ou 2, **caractérisé en ce que** l'agent émulsionnant est constitué pour au moins 10 % en poids de groupes oxyde d'éthylène et pour au moins 10 % en poids de groupes oxyde de propylène.

4. Procédé suivant l'une des revendications 1 à 3, **caractérisé en ce que** le polymère est constitué pour 40 à 100 % en poids de ce que l'on appelle des monomères principaux, choisis parmi des (méth)acrylates d'alkyle en C₁-C₂₀, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle, des éthers vinyliques d'alcools contenant de 1 à 10 atomes de C et des hydrocarbures aliphatiques comportant 2 à 8 atomes de C et 1 ou 2 doubles liaisons.
